Europäisches Patentamt

European Patent Office

Office européen des brevets

(19)

(11) **EP 1 574 480 A1**

(12) **EUROPEAN PATENT APPLICATION**

(43) Date of publication:
**14.09.2005 Bulletin 2005/37**

(51) Int Cl.$^7$: **C02F 1/48**, C02F 1/46

(21) Application number: **04005572.5**

(22) Date of filing: **09.03.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(71) Applicant: **MOCHIZAI, Tadashi
Kanagawa (JP)**

(72) Inventor: **MOCHIZAI, Tadashi
Kanagawa (JP)**

(74) Representative: **Henkel, Feiler & Hänzel
Möhlstrasse 37
81675 München (DE)**

(54) **Method and apparatus for activating water with permanent magnets**

(57) The present invention provides a water activating apparatus having a relatively simple structure without the possibility of water leakage and achieving highly efficient activation. The N pole (2) of an permanent magnet and an S pole (3) of the other magnet are vertically arranged above a water flow tube (1) so as to be opposed to each other. Concave yokes (4) are formed by molding magnetic metal or magnetic ceramic, with one yoke being attached to encase the N pole (2) of the permanent magnet and the other yoke being attached to encase the S pole (3) of the other permanent magnet. The vertically-arranged concave yokes (4) have a gap therebetween so as not to make a contact at their ends with each other. Furthermore, a non-magnetic conductive metal layer (10) is provided inside the concave yokes (4). Water is caused to pass through the water flow tube (1) in a direction (8) perpendicular to a direction (7) of magnetic lines of force and a direction (9) of an electromotive current.

F I G. 1

EP 1 574 480 A1

**Description**

The present invention relates to methods and apparatuses for activating water and, particularly, to a method of activating water over a wide range from supplied clean water and gray water to drain water and an apparatus for activating such water.

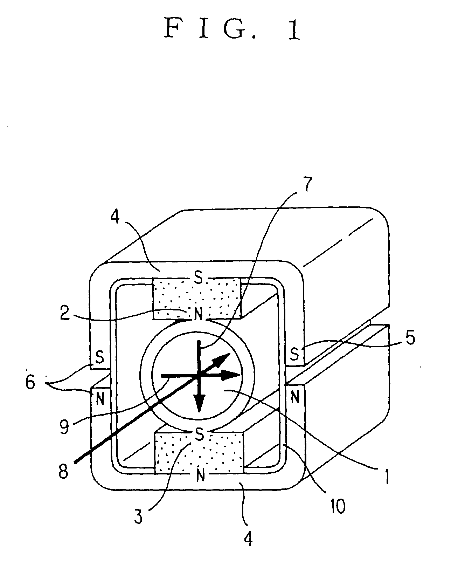

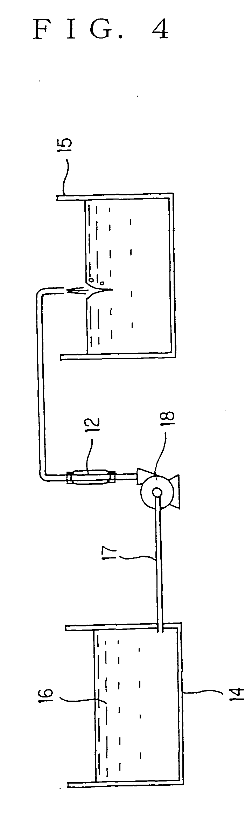

A scheme of activating water by splitting molecular population of water with the use of a magnetic force to reduce the size of a cluster (molecular assembly) of water has been well known. For example, there have been a system for activation in which water reserved in a reservoir is processed by a filtration unit and a magnetic processing unit (refer to Japanese Patent Laid-Open Publication No. 2002-254082, pp. 2-6, FIG. 1), an apparatus for activating a flow of water in which a permanent magnet is attached to the outside of a water flow tube and an image magnet is formed symmetrically to the surface of the water flow tube (refer to Japanese Patent Laid-Open PublicationNo. 2002-192159, pp. 2-3, FIG. 1), an apparatus in which counterclockwise magnetic lines of force and clockwise magnetic lines of force are alternately generated and a flow of water is allowed to pass through the generated magnetic lines of force for activation (refer to Japanese Patent Laid-Open Publication No. 2002-66566, pp. 3-5, FIG. 4), etc. As such, in general, activation is performed by allowing water to pass between the S pole and the N pole of at least a pair of magnets.

In order to more efficiently perform activation by using these schemes, however, it is required to use strong magnets. Other than intensifying the magnetic force, there is no way to improve the efficiency of water activation. Therefore, the degree of activation is disadvantageously low and insufficient.

In order to solve the above disadvantage, the inventor of the present invention has previously suggested a water activating method in which the S pole and the N pole are opposed to each other and, for the purpose of efficient activation, a non-magnetic conductive metal plate is used to cause an electromotive current occurring in a direction perpendicular to a flow of water to repulsively act, thereby acting electrons and also a magnetic force upon the flow of water, and an apparatus for this method (refer to Japanese Patent Laid-Open Publication No. 11-138173, pp. 2-5, FIG. 1). This apparatus has a structural problem, however, that a carbon electrode has to be fitted into the water flow tube, thereby disadvantageously causing an inconvenience of adherence for the purpose of preventing water leakage.

As has been described above, the conventional water activating apparatuses have the problem that there is no way to improve the efficiency of water activation other than intensifying the magnetic force. In order to solve this problem, the inventor has previously suggested the above-described method and apparatus, which, however, have the problem in view of the structure for preventing water leakage.

Therefore, an object of the present invention is to achieve a water activating apparatus which solves the above-described problems, the water activating apparatus having a relatively simple structure without the possibility of water leakage and achieving highly efficient activation, and is also to achieve an activating method used for the water activating apparatus.

In order to attain the above object, a water activating method according to the present invention is characterized in that at least one pair of permanent magnets with an N pole and an S pole thereof being opposed to each other is provided across a water flow tube, concave yokes in a pair that are formed by molding magnetic metal or magnetic ceramic are arranged so as to be opposed to each other with a predetermined gap therebetween and each to magnetically make a contact with a surface of one of the permanent magnets opposite to a surface thereof that is opposed to another one of the permanent magnets, a non-magnetic conductive metal layer is laminated inside the concave yokes including the gap therebetween and excluding contact areas that make a contact with the permanent magnets, the non-magnetic conductive metal layer being formed by single plating made of either one of metals of copper, silver, and gold or composite plating made of the metals, or a composite metal plate formed by laminating films made of the metals, thereby improving an electric potential inside the pair of the concave yokes, with water passing through the water flow tube, an electromotive current occurring in a direction perpendicular to a direction of a flow of water and a direction of magnetic lines of force occurring between the permanent magnets is caused to repulsively act by an electric potential inside the yokes in a longitudinal direction of the water flow tube, thereby performing a process by causing electrons and a magnetic force occurring between the permanent magnets to act upon the flow of water in the water flow tube.

With this, magnetic activation by the permanent magnets and electrochemical activation by electrons are performed. Thus, with synergy of the magnetic force and the electronic force, more efficient activation can be achieved at a higher degree compared with an activating scheme merely with the magnetic force. Also, a water activating method without the possibility of water leakage can be obtained.

Also, an apparatus according to the present invention is characterized by including at least one pair of concave yokes formed by molding magnetic metal or magnetic ceramic; an N pole formed by a permanent magnet provided so as to magnetically make a contact with an inner surface of one of the concave yokes; and an S pole formed by a permanent magnet provided so as to magnetically make a contact with an inner surface of another one of the concave yokes, the concave yokes being arranged so as to have a predetermined gap with the N pole and the S pole being opposed to each other, a non-magnetic conductive metal layer being laminated inside the concave yokes including the gap therebetween and excluding contact areas that make a contact with the permanent magnets, the non-magnetic conductive metal layer being formed by single plating made of either one of metals of copper, silver, and gold or composite plating made of the metals, or a composite metal plate formed by laminating films made of the metals, and a non-magnetic water flow tube being provided between the N pole and the S pole that are opposed to each other to allow a flow of water to pass therethrough in a direction perpendicular to a direction of magnetic lines of force from the N pole to the S pole, thereby activating the flow of water.

With this, magnetic activation by the permanent magnets and electrochemical activation by electrons are performed. Thus, with synergy of the magnetic force and the electronic force, more efficient activation can be achieved at a higher degree compared with an activating scheme merely with the magnetic force. Also, a water activating apparatus without the possibility of water leakage can be obtained.

Furthermore, the present activating apparatus is characterized in that a box is provided for accommodating the concave yokes including a part of the water flow tube, and an outer surface of the box is covered with either one of chrome plating and a chrome metal plate made of strong diamagnetic metal.

With this, it is possible to achieve a water activating apparatus capable of blocking the magnetic lines of force without external leakage and causing the magnetic force to more effectively act upon the flow of water.

Still further, the present activating apparatus is characterized in that the non-magnetic conductive metal layer is formed by either one of composite plating and a composite metal plate formed by metals of different electric potentials, with a high-potential metal being positioned on a side of the water flow tube.

With this, it is possible to achieve a water activating apparatus capable of promoting emission of electrons by contact cell reaction and causing electrons to more effectively act upon the flow of water.

Still further, the present activating apparatus is characterized in that the flow of water passing through the water flow tube is kept from contact with the concave yokes and the non-magnetic conductive metal layer.

With this, it is possible to achieve a water activating apparatus in which the possibility of water leakage is completely eliminated.

FIG. 1 is a perspective section view illustrating the internal structure of a water activating apparatus according to the present invention;

FIG. 2 is a center section view of a water activating apparatus according to one embodiment of the present invention;

FIG. 3 is a longitudinal section view of the water activating apparatus according the embodiment of the present invention; and

FIG. 4 is a schematic illustration showing outlines of equipment used in a test.

An activating apparatus according to the present embodiment is described in detail below with reference to the drawings.

FIG. 1 is a perspective section view illustrating the internal structure of a water activating apparatus according to the present invention.

In FIG. 1, 1 denotes a water flow pipe, 2 denotes an N pole of a permanent magnet, 3 denotes an S pole of another permanent magnet, 4 denotes concave yokes, 5 denotes ends of each concave yoke 4, 6 denotes polarities transferred to the ends of the concave yokes 4, 7 denotes a direction of magnetic lines of force, 8 denotes a direction of a flow of water, 9 denotes a direction of an electromotive current, and 10 denotes a non-magnetic conductive metal layer.

The N pole 2 of the permanent magnet and the S pole 3 of the other permanent magnet are vertically arranged above and below the water flow tube 1 so as to be opposed to each other. The concave yokes 4 are formed by molding magnetic metal or magnetic ceramic, with one yoke being attached to encase the N pole 2 of the permanent magnet and the other yoke being attached to encase the S pole 3 of the other permanent magnet. The concave yokes 4 are vertically opposed to each other, and have a gap therebetween so as not to make a contact at their ends with each other.

Thus, since one side of the permanent magnet is attached to the concave yoke 4, the polarity of that side of the permanent magnet is transferred to both ends of the concave yoke 4 facing the gap. Through such polarity transfer, the N pole 6 at the end of one concave yoke 4 and the S pole 6 at the end of the other concave yoke 4 are attracted to each other, thereby forming a magnetic circuit preventing leakage of the magnetic lines of force to the outside of the concave yokes 4.

With the above structure, when the flow of water passes through the magnetic lines of force in the direction 8 indicated by an arrow, an electromotive current occurs in the direction 9 indicated by another arrow which is horizontal and perpendicular to the flow of water.

The electromotive current has an intensity E proportional to a magnetic flux density B and a flow speed V of the flow of water, which can be represented by the following equation:

$$E = kBV,$$

where E is the intensity of the electromotive current, k is a constant, B is the magnetic flux density, and V is a flow speed of the flow of water.

For the purpose of performing induction charging of the electromotive current occurring in the above-described manner without discharge loss and efficiently emitting electrons occurring due to this charging into the flow of water, the non-magnetic conductive metal layer 10 is provided inside the concave yokes 4. The non-magnetic conductive metal layer 10 is formed by metal with a high electric potential, such as single plating made of either one of copper, silver, and gold that belong to Group IB of the periodic table or composite plating made of these metals, or a composite metal plate formed by laminating films made of these metals. With the non-magnetic conductive metal layer 10 having a property of pressing the magnetic lines of force to the center, the magnetic lines of force become highly dense and the magnetic flux density B becomes increased, thereby increasing the occurrence of the electromotive current. Furthermore, the electromotive current occurred is blocked and cannot pass through the non-magnetic conductive metal layer 10.

Also, the non-magnetic conductive metal layer 10 is higher in electric potential than magnetic metal or magnetic ceramic forming the concave yokes 4. Therefore, with contact cell reaction, the electric potential at the center of the inside of the non-magnetic conductive metal layer 10 becomes further increased, thereby more efficiently causing the electrons to repulsively act for emission into the flow of water.

If being formed by composite metal or a composite metal plate, the non-magnetic conductive metal layer 10 is formed by jointing a high-potential metal and a low-potential metal together, with the high-potential metal being positioned on a side of the water flow tube 1. Thus, emission of more electrons are promoted.

The electrons emitted into the flow of water provide charges to oxygen, which is a part of a molecule of water ($H_2O$) and is an electron acceptor, thereby increasing the bipolarity of water. This widens the bond angle formed by the hydrogen atoms, and therefore increases the density of water molecules and reduces the size of a molecular assembly (cluster) of water. The flow of water becomes negatively charged with its oxidation-reduction potential being lowered, and thus becomes a return flow to promote water activation.

The occurrence of clusters is caused by hydrogen bonding. When the water becomes electronically rich, electrons in the hydrogen atoms of the water molecule and free electrons repulsively act each other. When this repulsive force becomes higher than the van der Waals bond of force of water, hydrogen bonding is cut out to produce microclusters, thereby activating the Brownian movement of water molecules. Simultaneously, an electron emitted into the flow of water is bonded to dissolved oxygen in the water to form anionic oxygen ($O + e^- \rightarrow O^-$), which reacts with the water to yield hydroxyl radical ($O^- + H_2O = 2OH$), thereby slightly alkalizing the water to be processed.

With this, by using the water activating apparatus according to the present invention, magnetic activation by permanent magnets and electrochemical activation by electrons are performed. Thus, with synergy of a magnetic force and an electronic force, far superior activation can be performed compared with an activating scheme merely with a magnetic force.

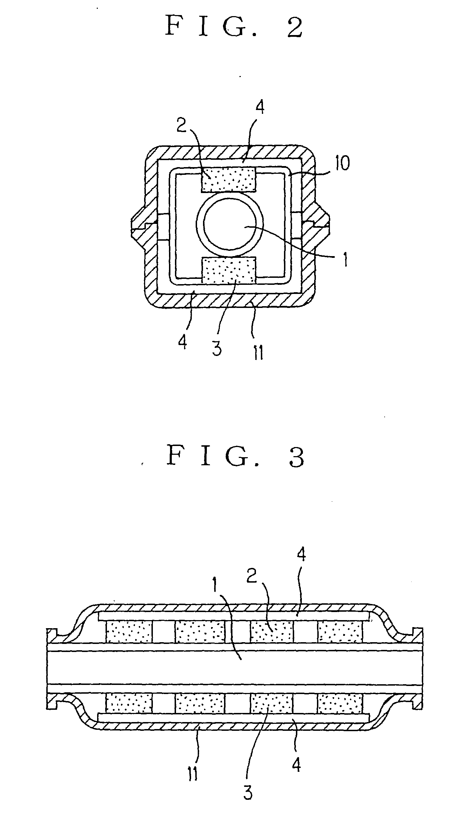

An embodiment of the water activating apparatus according to the present invention is described below with reference to FIGS. 2 and 3. FIG. 2 is a center section view of the water activating apparatus according to the embodiment, and FIG. 3 is a longitudinal section view thereof.

As illustrated in the drawings, four pairs of Nd-Fe-B-type permanent magnets 3 are arranged so that the magnets of each pair are placed above and below the water flow tube 1 with the N pole and the S pole being opposed to each other. Also, copper plates 10 of non-magnetic conductive metal are provided as a pair at the right and left sides of the water flow tube 1. Furthermore, the yokes 4 are provided as a pair outside the copper plates 10 so as to make a contact with the copper plates 10 and the permanent magnets 3. The above-described components are accommodated in a box 11. The outer surface of this box 11 is covered with a chrome metal plate, which is strongly diamagnetic.

Specifications of the present embodiment are as shown in Table 1.

[Table 1]

| Permanent Magnet | Type: Nd-Fe-B (neodymium-iron-boron) type<br>Residual magnetic flux density: 12,400 gausses<br>Magnetic field: In-plane magnetic field<br>The number of units: 8 (4 pairs)<br>Distance between N-S magnetic poles: 26 mm |
|---|---|
| Non-magnetic conductive metal plate | Type: Copper<br>Distance between polar plates: 26 mm |
| Yoke | Type: Iron<br>Thickness: 5 mm |
| Water flow tube | Type: Hard polyvinyl chloride<br>Size: Caliber 20 mm$\phi$ |
| Box | Material: Hard polyurethane resin externally coated with chrome metal plate |

With the use of the water activating apparatus according to the present invention illustrated in FIGS. 2 and 3 to form a configuration illustrated in FIG. 4, a water activating process was performed to compare processed water with untreated water in oxidation-reduction potential, pH (potential of hydrogen), the number of minus ions, BOD (biochemical oxygen demand), general viable cell count, etc. In the configuration of FIG. 4, untreated raw water 16 of 200 l is put in a water tank 14 with a hard polyvinyl chloride tube 17 being installed thereon, and is then poured into a water tank 15 by a pump 18 provided on its way. An water activating apparatus 12 according to the present embodiment is provided between the pump 18 and the water tank 15. The water after a one-pass process was compared with the untreated water.

The results of the processing test were as shown in Table 2 through Table 5.

[Table 2]

| Raw water: Tap water | |
|---|---|
| | Oxidation-reduction potential |
| Untreated water | 275 mV |
| Water after one-pass process | 223 mV |

[Table 3]

| Raw water: Tap water | |
|---|---|
| | pH |
| Untreated water | 7.2 |
| Water after one-pass process | 7.8 |

[Table 4]

| Raw water: Fish processing drain water | |
|---|---|
| | BOD |
| Untreated water | 1500 mg |
| Water after one-pass process | 400 mg |

[Table 5]

| Raw water: Gulf seawater | | |
|---|---|---|
| | Viable cell count | Coliform bacteria count |
| Untreated water | 480/ml | 6000/ml |
| Water after one-pass process | 48/ml | 0/ml |

As evident from the above Table 2, with the use of the water activating apparatus according to the present invention, the oxidation-reduction potential was reduced by approximately 81%, from 275 mV of the original tap water to 223 mV after the one-pass process. With this, the processed water absorbs electrons, thereby increasing its reducing power and bipolarity.

Also, as evident from Table 3, pH was changed from 7.2 of the original tap water to 7.8 after the one-pass process with more alkalinity. This indicates a high occurrence of hydroxyl radical.

Furthermore, as evident from Table 4, the contaminated fish processing drain water with BOD of 15000 mg/l was dramatically improved to BOD of 400 mg/l after the one-pass process. Still further, as evident from Table 5, almost all the viable cells and coliform bacteria in the gulf seawater were eliminated by the one-pass process. As such, the present apparatus is quite effective in activating water and improving water quality.

As has been described in the foregoing, according to the present invention, water can be significantly activated with synergy of the magnetic force and the electronic force, thereby obtaining water of a far higher degree of activation than that obtained in the conventional scheme using only the magnetic force. Also, in the structure of the apparatus, a portion for generating a magnetic field and electrons does not make a contact directly with water. Therefore, the possibility of water leakage and the like can be totally eliminated. This activation achieves microclustered water, thereby obtaining good and highly-purified water.

Description of Reference Numerals

| 1 | water flow tube |
|---|---|
| 2 | N pole of a permanent magnet |
| 3 | S pole of the permanent magnet |
| 4 | concave yoke |
| 5 | end of the concave yoke |
| 6 | transferred polarity of the concave yoke |
| 7 | direction of magnetic lines of force |
| 8 | direction of a flow of water |
| 9 | direction of a electromotive current |
| 10 | non-magnetic conductive metal layer |
| 11 | box |
| 12 | activating apparatus |
| 14, 15 | water tank |
| 16 | raw water |
| 17 | hard polyvinyl chloride tube |
| 18 | pump |

**Claims**

1. A water activating method **characterized in that** at least one pair of permanent magnets with an N pole (2) and an S pole (3) thereof being opposed to each other is provided across a water flow tube (1), concave yokes (4) in a pair that are formed by molding magnetic metal or magnetic ceramic are arranged so as to be opposed to each other with a predetermined gap therebetween and each to magnetically make a contact with a surface of one of the permanent magnets opposite to a surface thereof that is opposed to another one of the permanent magnets, a non-magnetic conductive metal layer (10) is laminated inside the concave yokes including the gap therebetween and excluding contact areas that make a contact with the permanent magnets, the non-magnetic conductive metal layer being formed by single plating made of either one of metals of copper, silver, and gold or composite plating made of the metals, or a composite metal plate formed by laminating films made of the metals, thereby improving an electric potential inside the pair of the concave yokes,

with water passing through the water flow tube, an electromotive current occurring in a direction (9) perpendicular to a direction (8) of a flow of water and a direction (7) of magnetic lines of force occurring between the permanent magnets is caused to repulsively act by an electric potential inside the yokes in a longitudinal direction of the water flow tube,

thereby performing a process by causing electrons and a magnetic force occurring between the permanent magnets to act upon the flow of water in the water flow tube.

2.  A water activating apparatus **characterized by** comprising:

at least one pair of concave yokes formed by molding magnetic metal or magnetic ceramic;
an N pole formed by a permanent magnet provided so as to magnetically make a contact with an inner surface of one of the concave yokes; and
an S pole formed by a permanent magnet provided so as to magnetically make a contact with an inner surface of another one of the concave yokes,
the concave yokes being arranged so as to have a predetermined gap with the N pole and the S pole being opposed to each other,
a non-magnetic conductive metal layer being laminated inside the concave yokes including the gap therebetween and excluding contact areas that make a contact with the N pole and the S pole, the non-magnetic conductive metal layer being formed by single plating made of either one of metals of copper, silver, and gold or composite plating made of the metals, or a composite metal plate formed by laminating films made of the metals, and
a non-magnetic water flow tube being provided between the N pole and the S pole that are opposed to each other to allow a flow of water to pass therethrough in a direction perpendicular to a direction of magnetic lines of force from the N pole to the S pole, thereby activating the flow of water.

3.  The water activating apparatus according to claim 2, **characterized in that** a box (11) is provided for accommodating the concave yokes including a part of the water flow tube, and an outer surface of the box is covered with either one of chrome plating and a chrome metal plate made of strong diamagnetic metal.

4.  The water activating apparatus according to claim 2 or 3, **characterized in that** the non-magnetic conductive metal layer is formed by either one of composite plating and a composite metal plate formed by metals of different electric potentials, with a high-potential metal being positioned on a side of the water flow tube.

5.  The water activating apparatus according to any one of claims 2 through 4, **characterized in that** the flow of water passing through the water flow tube is kept from contact with the concave yokes and the non-magnetic conductive metal layer.

F I G.  1

# FIG. 2

# FIG. 3

# F I G. 4

## EP 1 574 480 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 2002, no. 07, 3 July 2002 (2002-07-03) & JP 2002 086153 A (MOCHIZAI TADASHI), 26 March 2002 (2002-03-26) * abstract; figures 1,2 * ----- | 1-5 | C02F1/48 C02F1/46 |
| X,D | PATENT ABSTRACTS OF JAPAN vol. 1999, no. 10, 31 August 1999 (1999-08-31) & JP 11 138173 A (MOCHIZAI TADASHI; KAWAKAMI HIROKO; KUMATORIYA SANAE; AMANO KOUKI), 25 May 1999 (1999-05-25) * abstract; figures 1-3 * ----- | 1-5 | |
| A | DE 35 03 691 A (KUNEL HEINRICH) 7 August 1986 (1986-08-07) * page 11, line 35 - page 12, line 30; figure 9 * ----- | 1-5 | |
| A | US 2004/031759 A1 (RICHARD GORDON L) 19 February 2004 (2004-02-19) * page 2, paragraph 28 - page 3, paragraph 40; figures 2-4 * ----- | 1-5 | TECHNICAL FIELDS SEARCHED (Int.Cl.7) C02F B01J F02M |

The present search report has been drawn up for all claims

| Place of search | Date of completion of the search | Examiner |
|---|---|---|
| Munich | 29 July 2004 | Beckmann, O |

EPO FORM 1503 03.82 (P04C01)

**ANNEX TO THE EUROPEAN SEARCH REPORT**
**ON EUROPEAN PATENT APPLICATION NO.**                    EP 04 00 5572

This annex lists the patent family members relating to the patent documents cited in  the above-mentioned European search report.
The members are as contained in the European Patent Office EDP file on
The European Patent Office is in no way liable for these particulars which are merely  given for the purpose of information.

29-07-2004

| Patent document cited in search report | | Publication date | Patent family member(s) | | Publication date |
|---|---|---|---|---|---|
| JP 2002086153 | A | 26-03-2002 | JP CN | 3469541 B2<br>1343630 A | 25-11-2003<br>10-04-2002 |
| JP 11138173 | A | 25-05-1999 | JP | 3389079 B2 | 24-03-2003 |
| DE 3503691 | A | 07-08-1986 | DE | 3503691 A1 | 07-08-1986 |
| US 2004031759 | A1 | 19-02-2004 | WO | 2004033086 A1 | 22-04-2004 |

EPO FORM P0459

For more details about this annex : see Official Journal of the European Patent Office, No. 12/82